# EUROPÄISCHE PATENTSCHRIFT

(11) **EP 3 065 846 B1**
(45) Veröffentlichungstag und Bekanntmachung des Hinweises auf die Patenterteilung: **17.05.2017**
(21) Anmeldenummer: 14793538.1
(22) Anmeldetag: 04.11.2014
(51) Int. Cl.: B01D 46/00, B01D 46/10, B01D 46/52

(54) **PLATTENFILTERELEMENT**
PLATE FILTER ELEMENT
ÉLÉMENT DE FILTRE À PLAQUES

(30) Priorität: 06.11.2013 DE 102013222469
(43) Veröffentlichungstag der Anmeldung: 14.09.2016
(73) Patentinhaber: Mahle International GmbH, 70376 Stuttgart (DE)
(72) Erfinder: VON MERKATZ, Hendrik, 73252 Lenningen (DE)
(74) Vertreter: BRP Renaud & Partner mbB Rechtsanwälte Patentanwälte Steuerberater
(86) Internationale Anmeldenummer: PCT/EP2014/073632
(87) Internationale Veröffentlichungsnummer: WO 2015/067580

(56) Entgegenhaltungen:
- DE-A1- 10 231 696
- DE-A1- 10 241 748
- DE-A1- 10 320 260
- DE-U1-202007 004 794
- DE-U1-202008 007 292

## Beschreibung

Die vorliegende Erfindung betrifft ein Plattenfilterelement, also ein plattenförmiges Filterelement zum Filtern von Luft.

Derartige Filterelemente kommen dabei bevorzugt bei Frischluftanlagen von Brennkraftmaschinen zum Einsatz, um Frischluft zu reinigen, die Brennräume der Brennkraftmaschine zugeführt werden soll. Ferner kann ein derartiges Filterelement auch bei einer Innenraumbelüftung zum Einsatz kommen, um Frischluft zu reinigen, die einem Fahrzeuginnenraum zugeführt werden soll.

Ein plattenförmiges Filterelement charakterisiert sich durch einen plattenförmigen Filterkörper aus einem gefalteten Filtermaterial, das eine Vielzahl von Falten aufweist, die in einer Längsrichtung des Filterkörpers nebeneinander angeordnet sind. Dabei sind je zwei in der Längsrichtung des Filterkörpers benachbarte Falten über einen gemeinsamen Faltenrücken oder Falz miteinander verbunden. Die einzelnen Falze verlaufen dabei parallel zu einer Querrichtung des Filterkörpers.

Unter dem Begriff "plattenförmig" ist hierbei eine im Wesentlichen quaderförmige Umhüllungskontur zu verstehen, die den Filterkörper umhüllt, also durch die Außenkanten des Filtermaterials definiert ist. Ein derartiger plattenförmiger Filterkörper erstreckt sich in einer Plattenebene, die durch eine Längsrichtung und eine Querrichtung des Filterkörpers aufgespannt ist. Innerhalb der Plattenebene besitzt der Filterkörper bevorzugt einen rechteckigen Querschnitt. Für spezielle Einbausituationen kann es jedoch auch erforderlich sein, zumindest eine Ecke einer rechteckigen Ausgangskontur schräg abzuschneiden, wodurch die jeweilige rechtwinklige Ecke durch eine Schrägfläche mit zwei anderen, nicht rechtwinkligen Ecken ersetzt wird.
Damit der Filterkörper im Bereich seiner Längsenden eine gewisse Formstabilität besitzt, kann der Filterkörper zumindest an einem seiner Längsenden einen Seitenstreifen aufweisen, der mit der an diesem Längsende ausgebildeten letzten Falte des Filtermaterials verklebt ist. Der Seitenstreifen kann gleichzeitig auch als Dichtung dienen oder eine Dichtung aufweisen, um das Filterelement im Einbauzustand gegenüber einer Filteraufnahme abzudichten, die beispielsweise in einem Filtergehäuse einer Luftfiltereinrichtung hierzu ausgebildet sein kann.
Bei herkömmlicher Bauweise des Filterelements erstrecken sich sämtliche Falten, also auch die letzten Falten, über die gesamte Höhe des Filterkörpers, die senkrecht zur Plattenebene, also quer zur Längsrichtung und quer zur Querrichtung gemessen ist. Es hat sich gezeigt, dass der Filterkörper trotz des Seitenstreifens an seinem Längsende einer erhöhten Deformationsgefahr ausgesetzt ist. Insbesondere kann der Filterkörper im Bereich seines Längsendes beulen bzw. einfallen, wodurch die Gefahr von Leckagen entsteht. Gattungsgmässe Filterelemente sind in der DE 20 2007 004794 U und der DE 20 2008 007292 U offenbart. Die vorliegende Erfindung beschäftigt sich mit dem Problem, für ein Filterelement der eingangs genannten Art eine verbesserte Ausführungsform anzugeben, die sich insbesondere durch eine erhöhte Formstabilität im Bereich des jeweiligen Längsendes auszeichnet.
Dieses Problem wird erfindungsgemäß durch den Gegenstand des unabhängigen Anspruchs gelöst. Vorteilhafte Ausführungsformen sind Gegenstand der abhängigen Ansprüche.

Die Erfindung beruht auf dem allgemeinen Gedanken, die letzte Falte in der Höhenrichtung des Filterkörpers zu verkürzen, wodurch es möglich ist, den Seitenstreifen mit wenigstens zwei verschiedenen Falten zu verkleben. Auf diese Weise können in die Aussteifung des Längsendes neben dem Seitenstreifen zumindest zwei verschiedene Falten eingebunden werden. Hierdurch erhält das Längsende eine signifikant vergrößerte Stabilität.

Im Einzelnen schlägt die Erfindung vor, die letzte Falte in der Höhenrichtung des Filterkörpers kürzer zu gestalten als die Höhe des Filterkörpers. Der Seitenstreifen kann dann mit der letzten Falte und mit der zweitletzten und/oder drittletzten Falte verklebt werden. Somit lassen sich am jeweiligen Längsende des Filterkörpers zwei oder drei Falten mit dem Seitenstreifen zu einer vergleichsweise stabilen Struktur verkleben.

Gemäß einer vorteilhaften Ausführungsform kann eine freie Endkante der letzten Falte in einem Bereich von 25% bis 75% oder in einem Bereich von 1/3 bis 2/3 oder bei etwa 50% der Höhe des Filterkörpers angeordnet sein. Hierdurch kann eine vergleichsweise symmetrische Aussteifung des jeweiligen Längsendes realisiert werden.

Gemäß einer Weiterbildung kann vorgesehen sein, dass der Seitenstreifen vom letzten Falz bis zum zweitletzten Falz ausschließlich mit der letzten Falte und der zweitletzten Falte verklebt ist. Somit erstreckt sich die Verklebung über die gesamte Höhe des Filterkörpers. Auch der Seitenstreifen erstreckt sich dann zweckmäßig über die gesamte Höhe des Filterkörpers.

Bei einer anderen Weiterbildung kann vorgesehen sein, dass der Seitenstreifen vom letzten Falz bis zur freien Endkante ausschließlich mit der letzten Falte und von der freien Endkante bis zum zweitletzten Falz ausschließlich mit der zweitletzten Falte verklebt ist. Auch hierdurch wird eine intensive Verklebung und Aussteifung des jeweiligen Längsendes erreicht. Zwischen dem letzten Falz und der freien Endkante können die letzte Falte und die vorletzte Falte lose aneinanderlegen. Ebenso ist bei einer anderen Ausführungsform denkbar, dass der Klebstoff die letzte Falte durchdringt, so dass auch die letzte Falte mit der zweitletzten Falte verklebt sein kann.

Bei einer weiteren Ausführungsform kann vorgesehen sein, dass auch die zweitletzte Falte in der Höhenrichtung kürzer ist als die Höhe des Filterkörpers, so dass der letzte Falz in der Höhenrichtung zwischen dem zweitletzten Falz und dem drittletzten Falz angeordnet ist. Auf diese Weise lassen sich letztlich drei Falten mit dem Seitenstreifen verkleben, wodurch die Aussteifung des Längsendes besonders stabil wird.

Entsprechend einer bevorzugten Weiterbildung kann vorgesehen sein, dass der Seitenstreifen von der freien Endkante der letzten Falte bis zum drittletzten Falz ausschließlich mit der letzten Falte und der drittletzten Falte verklebt ist. Zusätzlich oder alternativ kann vorgesehen sein, dass der Seitenstreifen von der freien Endkante bis zum letzten Falz nur mit der letzten Falte und von dem letzten Falz bis zum drittletzten Falz nur mit der drittletzten Falte verklebt ist. Beide Maßnahmen binden somit die letzte Falte und in jedem Fall auch die drittletzte Falte in die Verklebung mit dem Seitenstreifen ein. Durch die verkürzte zweite Falte ergibt sich eine zusätzliche Falzung bzw. ein zusätzlicher Falz, der das jeweilige Längsende intensiv aussteift.

Bei einer anderen vorteilhaften Weiterbildung kann die freie Endkante in der Höhenrichtung auf der Höhe des zweitletzten Falzes angeordnet sein. Insbesondere kann dadurch die letzte Falte in der Höhenrichtung im Wesentlichen gleich groß sein wie die zweitletzte Falte. Hierdurch ergibt sich eine besonders einfache Geometrie zum Verkleben des Seitenstreifens.

Da bei dieser Ausführungsform auch die zweitletzte Falte in der Höhenrichtung verkürzt ausgeführt ist, ergibt sich in der Höhenrichtung zwischen einem oberen Ende und einem unteren Ende des Filterkörpers ein zusätzlicher Falz, nämlich der letzte Falz, der die letzte Falte mit der zweitletzten Falte verbindet. Dieser zusätzliche Falz führt zu einer signifikanten Aussteifung des jeweiligen Längsendes.

Bei einer anderen Weiterbildung kann der letzte Falz in einem Bereich von 25% bis 75% oder in einem Bereich von 1/3 bis 2/3 oder bei etwa 50% der Höhe des Filterkörpers angeordnet sein. Diese Maßnahme führt zu einer intensiven Aussteifung des jeweiligen Längsendes des Filterkörpers.

Besonders leicht herstellbar ist eine Ausführungsform, bei welcher die letzte Falte und die zweitletzte Falte etwa gleich hoch sind und bei welcher der letzte Falz etwa bei 50% der Höhe des Filterkörpers angeordnet ist. Diese Ausführungsform lässt sich beispielsweise dadurch herstellen, dass beim unfertigen Filterkörper die bis dahin letzte Falte nochmals mittig gefalzt wird, um aus der bis dahin letzten Falte die endgültig letzte Falte und die zweitletzte Falte zu erzeugen, die dann über den zusätzlichen Falz miteinander verbunden sind, der endgültig den letzten Falz definiert.

Bei einer anderen Ausführungsform kann dagegen vorgesehen sein, die letzte Falte in der Höhenrichtung kürzer auszugestalten als die zweitletzte Falte. Der Seitenstreifen kann bei dieser Ausführungsform dann vom zweitletzten Falz bis zum drittletzten Falz mit der letzten Falte, mit der zweitletzten Falte und mit der drittletzten Falte verklebt werden. Bei dieser Ausführungsform sind somit die drei letzten Falten jeweils mit dem Seitenstreifen verklebt, was das Längsende mit einer besonders hohen Steifigkeit ausstattet. Somit sind in die Verklebung mit dem Seitenstreifen hier die Endkante und der letzte Falz eingebunden, was die Aussteifung des Längsendes verbessert.

Gemäß einer Weiterbildung kann vorgesehen sein, dass der Seitenstreifen vom zweitletzten Falz bis zur freien Endkante nur mit der zweitletzten Falte, von der freien Endkante bis zum letzten Falz nur mit der letzten Falte und von dem letzten Falz bis zum drittletzten Falz nur mit der drittletzten Falte verklebt ist.

Gemäß einer anderen Weiterbildung kann die freie Endkante in einem Bereich von 20% bis 40% oder bei etwa ein Drittel der Höhe des Filterkörpers angeordnet sein, während der letzte Falz in einem Bereich von 60% bis 80% oder bei etwa zwei Drittel der Höhe des Filterkörpers angeordnet sein kann. Insbesondere entspricht dabei die Höhe der letzten Falte etwa 50% der Höhe des Filterkörpers, während die Höhe der zweitletzten Falte etwa bei 60% bis 80% oder etwa bei 2/3 der Höhe des Filterkörpers liegt. Auch diese Maßnahmen verbessern die Aussteifung des jeweiligen Längsendes.

Gemäß einer anderen vorteilhaften Ausführungsform kann der Seitenstreifen gegenüber der Höhenrichtung geneigt sein. Durch die Neigung des Seitenstreifens wird die für die Verklebung zur Verfügung stehende Fläche vergrößert, was die Aussteifung des jeweiligen Längsendes verbessert.

Gemäß einer Weiterbildung kann der Seitenstreifen in einer die Längsrichtung und die Höhenrichtung enthaltenden Ebene gegenüber der Höhenrichtung einen Neigungswinkel aufweisen, der in einem Bereich von 30° bis 60° oder bei etwa 45° liegt. Es hat sich gezeigt, dass bei einem derartigen Neigungswinkel das jeweilige Längsende besonders steif wird und die Tendenz zur Ausbeulung signifikant reduziert ist.

Es ist vorteilhaft, das Ankleben des jeweiligen Seitenstreifens so durchzuführen, dass zunächst der jeweilige Seitenstreifen mit einem Kleber versehen wird und dann an die Falten angedrückt wird. Insbesondere ist es vorteilhaft, wenn der Seitenstreifen mit einem Schmelzkleber beschichtet ist und durch Zuführen von Reaktionsenergie bzw. Wärme auf Klebetemperatur erwärmt wird. Hierbei werden nur die Falten mit dem Seitenstreifen verklebt, welche den Seitenstreifen direkt kontaktieren. Die Falten, welche den Seitenstreifen nicht kontaktieren, werden somit nicht von dem Kleber benetzt. Alternativ können auch die Falten mit Kleber versehen werden. Hierbei können nur die den Seitenstreifen kontaktierenden Falten benetzt werden. Alternativ können jedoch zusätzlich auch die Falten, die den Seitenstreifen nicht kontaktieren, mit Kleber benetzt sein, wodurch eine Verklebung der benachbarten Falten miteinander stattfindet.

Der jeweilige Seitenstreifen besteht vorzugsweise aus einem luftdurchlässigen Werkstoff, insbesondere aus einem Kunststoff. Beispielsweise ist der Seitenstreifen durch ein Gewebe, ein Gewirk, ein Vlies oder einen Schaum gebildet, jeweils vorzugsweise aus Kunststoff. Insbesondere besitzt der Seitensrteifen dadurch eine ähnlich hohe Elastizität und Flexibilität wie das Filtermaterial. Durch die Verklebung des Seitenstreifens mit den jeweiligen endseitigen Falten erfolgt eine Versteifung des Seitenstreifens, der betroffenen Falten und des so gebildeten Klebeverbunds aus dem Seitenstreifen und den betroffenen Falten. Gleichzeitig kann der Seitenstreifen bzw. der genannte Verbund durch die Verklebung hinreichend luftdicht werden, so dass im Bereich des jeweiligen Seitenstreifens keine Leckage auftritt. Zusätzlich oder alternativ kann der Werkstoff des Seitenstreifens auch auf eine andere Art behandelt sein, um die gewünschte Luftdichtigkeit zu erhalten. Auch kann der Werkstoff des Seitenstreifens komprimiert bzw. verdichtet sein, um seine Luftdurchlässigkeit zu reduzieren und seine Steifigkeit zu erhöhen. Ein derartiger Seitenstreifen ist preiswert, leicht und einfach zu entsorgen. Insbesondere kann somit optional vorgesehen sein, dass die letzte Falte mit der zweitletzten Falte verklebt ist. Dabei kann die letzte Falte flächig an der zweitletzten Falte anliegen, vorzugsweise über deren gesamte Höhe. Ebenso kann vorgesehen sein, dass die zweitletzte Falte mit der drittletzten Falte verklebt ist. Dabei kann die zweitletzte Falte flächig an der drittletzten Falte anliegen, vorzugsweise über deren gesamte Höhe.

Ferner kann das jeweilge Längsende auch dadurch zusätzlich aussgesteift werden, dass die letzte Falte im Vergleich zu Falten, die zum Längsende benachbart sind, komprimiert ist. Zusätzlich oder alternativ kann vorgesehen sein, dass die zweitletzte Falte im Vergleich zu Falten, die zum Längsende benachbart sind, komprimiert ist. Zusätzlich oder alternativ kann vorgesehen sein, dass die drittletzte Falte im Vergleich zu Falten, die zum Längsende benachbart sind, komprimiert ist. Die jeweilige Kompression kann beispielsweise beim Anbringen des Seitenstreifens durchgeführt werden. Insbesondere kann die Kompression in Verbindung mit der Verklebung realisiert werden. Demnach kann z.B. vorgesehen sein, dass die letzte Falte und die zweitletzte Falte im Vergleich zu Falten, die zum Längsende benachbart sind, komprimiert und miteinander verklebt sind. Zusätzlich oder alternativ kann vorgesehen sein, dass die zweitletzte Falte und die drittletzte Falte im Vergleich zu Falten, die zum Längsende benachbart sind, komprimiert und miteinander verklebt sind. Besonders vorteilhaft ist dabei eine kumulierte Variante, bei der die letzte Falte, die zweitletzte Falte und die drittletzte Falte im Vergleich zu Falten, die zum Längsende benachbart sind, komprimiert und miteinander verklebt sind.

Gemäß einer zweckmäßigen Weiterbildung kann vorgesehen sein, dass eine Wandstärke einer solchen komprimierten Falte maximal 50% einer Wandstärke einer solchen benachbarten Falte beträgt. Die Kompression auf die halbe Wandstärke führt zu einer quasi verdoppelten Verdichtung des Filtermaterials, was dessen Stabilität entsprechend erhöht.

Gemäß einer anderen vorteilhaften Ausführungsform kann vorgesehen sein, dass der drittletzte Falz so gefalzt ist, dass er die letzte Falte, die zweitletzte Falte und die drittletzte Falte überbrückt, so dass eine viertletzte Falte etwa parallel zum Seitenstreifen verläuft. Auch diese Maßnahme führt zu einer zusätzlichen Aussteifung des Filterelements im Bereich des jeweiligen Seitenstreifens.

Weitere wichtige Merkmale und Vorteile der Erfindung ergeben sich aus den Unteransprüchen, aus den Zeichnungen und aus der zugehörigen Figurenbeschreibung anhand der Zeichnungen.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Bevorzugte Ausführungsbeispiele der Erfindung sind in den Zeichnungen dargestellt und werden in der nachfolgenden Beschreibung näher erläutert, wobei sich gleiche Bezugszeichen auf gleiche oder ähnliche oder funktional gleiche Komponenten beziehen.

Es zeigen, jeweils schematisch,
- Fig. 1: eine stark vereinfachte, prinzipielle Ansicht eines Filterelements,
- Fig. 2: ein Längsschnitt des Filterelements entsprechend Schnittlinien II in Fig. 1 im Bereich eines Längsendes,
- Fig. 3: eine Schnittansicht wie in Fig. 2, jedoch bei einer weiteren Ausführungsform,
- Fig. 4: eine Schnittansicht wie in den Fig. 2 und 3, jedoch bei einer anderen Ausführungsform,
- Fig. 5: eine Schnittansicht wie in den Fig. 2 bis 4, jedoch bei einer nochmals anderen Ausführungsform,
- Fig. 6: eine Schnittansicht wie in den Fig. 2 bis 5, jedoch bei einer weiteren Ausführungsform.

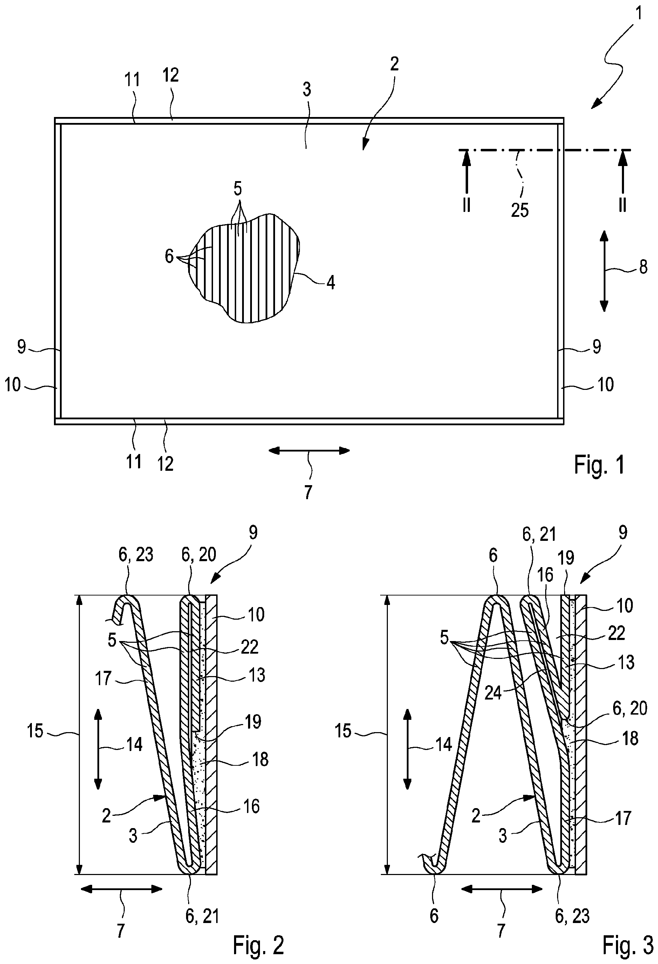

Entsprechend Fig. 1 umfasst ein Filterelement 1, das zum Filtern von Luft dient und das dementsprechend auch als Luftfilterelement bezeichnet werden kann, einen plattenförmigen Filterkörper 2, der mit Hilfe eines gefalteten Filtermaterials 3 gebildet ist. In Fig. 1 ist ein Bereich 4 angedeutet, in dem mehrere Falten 5 des Filtermaterials 3 erkennbar sind. Zu sehen sind insbesondere dem Betrachter zugewandte geradlinige Falze 6 oder Faltenrücken, die je zwei benachbarte Falten 5 miteinander verbinden. Das Filtermaterial 3 weist somit eine Vielzahl von Falten 5 auf, die in einer Längsrichtung 7 des Filterkörpers 2 nebeneinander angeordnet sind. Die Falze 6 verlaufen dabei parallel zueinander und parallel zu einer Querrichtung 8 des Filterkörpers 2. Im Beispiel der Fig. 1 ist die Längsrichtung 7 gröβer als die Querrichtung 8. Bei anderen Ausgestaltungen kann jedoch auch die Querrichtung 8 größer sein als die Längsrichtung 7.

Der Filterkörper 2 besitzt zumindest an einem seiner Längsenden 9 einen Seitenstreifen 10, der mit dem Filtermaterial 3 verklebt ist. Im Beispiel der Fig. 1 ist an beiden Längsenden 9 je ein solcher Seitenstreifen 10 vorgesehen. Außerdem ist an beiden Querenden 11 jeweils ein weiterer Seitenstreifen 12 angeordnet, der ebenfalls mit dem Filtermaterial 3 verklebt ist. Außerdem können die weiteren Seitenstreifen 12 an ihren Längsenden mit den Querenden der Seitenstreifen 10 verklebt sein. Ebenso ist denkbar, ein umlaufendes Seitenstreifenband vorzusehen, das an den Längsenden 9 die Seitenstreifen 10 bildet und das an den Querenden 11 die weiteren Seitenstreifen 12 bildet.

Entsprechend den Fig. 2 bis 6 kann nun vorgesehen sein, dass im Bereich des jeweiligen Längsendes 9 eine letzte Falte 13 in einer Höhenrichtung 14 kürzer oder kleiner ist als eine Höhe 15 des Filterkörpers 2. Die Höhenrichtung 14 erstreckt sich dabei quer zur Längsrichtung 7 und quer zur Querrichtung 8. Die Höhenrichtung 14 erstreckt sich somit senkrecht zu einer Plattenebene, welche durch die Längsrichtung 7 und die Querrichtung 8 aufgespannt ist.

Der Seitenstreifen 10 ist nun mit der letzten Falte 13 und mit einer zweitletzten Falte 16 und/oder mit einer drittletzten Falte 17 verklebt. Eine entsprechende Klebverbindung bzw. Verklebung ist in den Fig. 2 bis 6 mit 18 bezeichnet.

Bei der in Fig. 2 gezeigten Ausführungsform ist eine freie Endkante 19 der letzten Falte 13 bei etwa 50% der Höhe 15 des Filterkörpers 2, also bezüglich der Höhenrichtung 14 etwa mittig angeordnet. Hierdurch besitzt die letzte Falte 13 ihrerseits eine Höhe von etwa 50% der Höhe 15 des Filterkörpers 2. Bei einer anderen Ausführungsform kann die freie Endkante 19 bezüglich der Höhenrichtung 14 außermittig z.B. in einem Bereich von 25% bis 75% oder in einem Bereich von 1/3 bis 2/3 der Höhe 15 des Filterkörpers 2, angeordnet sein. Die Endkante 19 kann auf diese Weise in die Verklebung 18 eingebunden werden, was zu einer entsprechenden Versteifung des Längsendes 9 führt. Der Seitenstreifen 10 erstreckt sich zweckmäßig über die gesamte Höhe 15 des Filterkörpers 2. Dementsprechend ist der Seitenstreifen 10 zwischen einem letzten Falz 20 und einem zweitletzten Falz 21 mit der letzten Falte 13 und mit der zweitletzten Falte 16 verklebt. Im Einzelnen ist der Seitenstreifen 10 zwischen dem letzten Falz 20 und der freien Endkante 19 mit der letzten Falte 13 und zwischen der freien Endkante 19 und dem zweitletzten Falz 21 mit der zweitletzten Falte 16 verklebt. Dabei kann die letzte Falte 13 zwischen dem letzten Falz 20 und der freien Endkante 19 lose an der zweitletzten Falte 16 anliegen. Ein klebstofffreier Bereich zwischen der letzten Falte 13 und der zweitletzten Falte 16 ist dabei mit 22 bezeichnet.

Während bei der in Fig. 2 gezeigten Ausführungsform die zweitletzte Falte 16 dieselbe Höhe besitzt wie der Filterkörper 2, zeigen die Fig. 3, 4 und 6 je eine Ausführungsform, bei welcher die zweitletzte Falte 16 in der Höhenrichtung 14 kürzer ist als die Höhe 15 des Filterkörpers 2. In diesem Fall ist der letzte Falz 20 in der Höhenrichtung 14 zwischen dem zweitletzten Falz 21 und einem drittletzten Falz 23 angeordnet. In diesem Fall ist ferner vorgesehen, dass der Seitenstreifen 10 zwischen der freien Endkante 19 und dem drittletzten Falz 23 mit der letzten Falte 13 und der drittletzten Falte 17 verklebt ist. In diesen Fällen kann der letzte Falz 20 in die Verklebung 18 eingebunden sein, wodurch das jeweilige Längsende 9 intensiv ausgesteift ist.

Wie sich den Fig. 3, 4 und 6 entnehmen lässt, ist der jeweilige Seitenstreifen 10 zwischen der freien Endkante 19 und dem letzten Falz 20 mit der letzten Falte 13 und zwischen dem letzten Falz 20 und dem drittletzten Falz 23 mit der drittletzten Falte 17 verklebt.

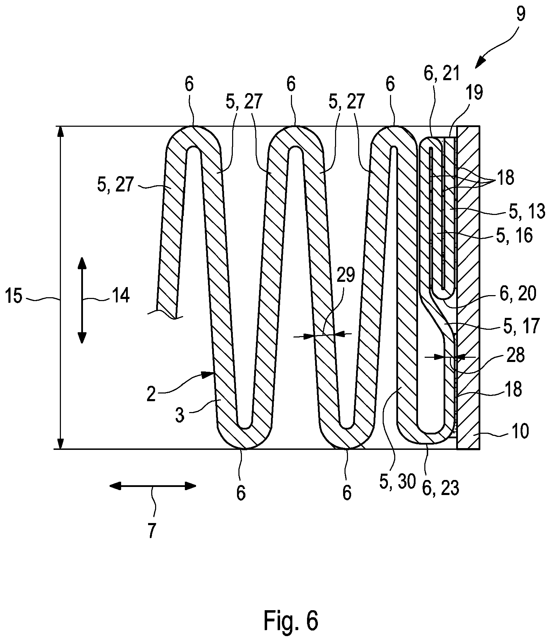

Bei den in den Fig. 3 und 6 gezeigten Ausführungsform ist die freie Endkante 19 in der Höhenrichtung 14 auf der Höhe des zweitletzten Falzes 21 angeordnet. Auch ist hier vorgesehen, dass die letzte Falte 13 in der Höhenrichtung 14 im Wesentlichen gleich groß ist wie die zweitletzte Falte 16. In diesen Fällen sind die letzte Falte 13 und die zweitletzte Falte 16 in der Höhenrichtung 14 jeweils etwa halb so groß wie die Höhe 15 des Filterkörpers 2. Hierdurch lassen sich diese Ausführungsformen besonders einfach herstellen.

Gemäß Fig. 3 ist hier ferner vorgesehen, den letzten Falz 20 bei etwa 50% der Höhe 15 des Filterkörpers 2 anzuordnen. Bei einer anderen Ausgestaltung kann, wie exemplarisch in Fig. 6 gezeigt, der letzte Falz 20 auch in einem Bereich von 25% bis 75% oder in einem Bereich von 1/3 bis 2/3 der Höhe 15 des Filterkörpers 2 angeordnet sein.

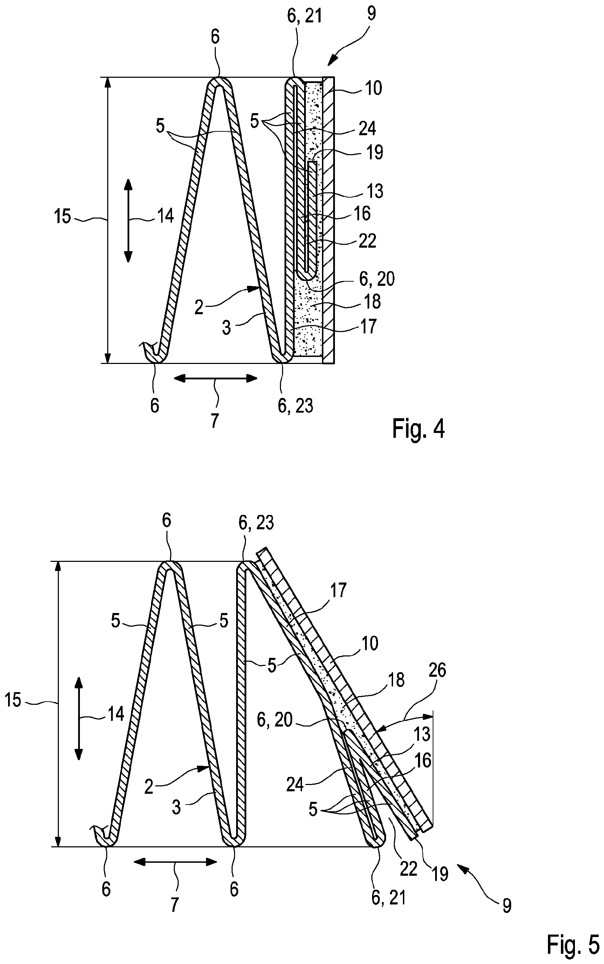

Fig. 4 zeigt nun eine Ausführungsform, bei der die letzte Falte 13 in der Höhenrichtung 14 kürzer ist als die zweitletzte Falte 16 und bei der die zweitletzte Falte 16 in der Höhenrichtung 14 kürzer ist als die Höhe 15 des Filterkörpers 2. Der Seitenstreifen 10 ist nun zwischen dem zweitletzten Falz 21 und dem drittletzten Falz 23 mit der letzten Falte 13, mit der zweitletzten Falte 16 und mit der drittletzten Falte 17 verklebt. Im Einzelnen erfolgt die Dimensionierung der letzten Falten 13, 16, 17 bzw. die Positionierung der letzten Falze 20, 21, 23 derart, dass der Seitenstreifen 10 zwischen dem zweitletzten Falz 21 und der freien Endkante 19 nur mit der zweitletzten Falte 16 verklebt ist, zwischen der freien Endkante 19 und dem letzten Falz 20 nur mit der letzten Falte 13 verklebt ist und zwischen dem letzten Falz 20 und dem drittletzten Falz 23 nur mit der drittletzten Falte 17 verklebt ist. Dabei kann auch hier vorgesehen sein, dass der Klebstoff das Filtermaterial 3 nicht durchdringt. Demnach liegt die letzte Falte 13 nur lose an der zweitletzten Falte 16 an. Ebenso liegt die zweitletzte Falte 16 nur lose an der drittletzten Falte 17 an. Ein klebstofffreier Bereich zwischen der letzten Falte 13 und der zweitletzten Falte 16 ist dabei wieder mit 22 bezeichnet. Ein klebstofffreier Bereich zwischen der zweitletzten Falte 16 und der drittletzten Falte 17 ist dagegen mit 24 bezeichnet.

Bei der in Fig. 4 gezeigten Ausführungsform ist die freie Endkante 19 bei etwa 1/3 der Höhe 15 des Filterkörpers 2 angeordnet, während der letzte Falz 20 dann bei etwa 2/3 der Höhe 15 des Filterkörpers 2 angeordnet ist. Für die freie Endkante 19 kommen grundsätzlich aber auch andere Positionierungen in Betracht, beispielsweise in einem Bereich von 20% bis 40% der Höhe 15 des Filterkörpers. Auch der letzte Falz 20 kann an anderer Stelle angeordnet sein, beispielsweise in einem Bereich von 60% bis 80% der Höhe 15 des Filterkörpers 2.

Gemäß den Fig. 2 bis 4 und 6 erstreckt sich der Seitenstreifen 10 vorzugsweise parallel zur Höhenrichtung 14.

Bei der in Fig. 5 gezeigten Ausführungsform erfolgt die Faltung bzw. Falzgebung des jeweiligen Längsendes 9 analog zu der in Fig. 3 gezeigten Ausführungsform. Es ist klar, dass grundsätzlich auch eine Faltung bzw. Falzung gemäß der in den Fig. 2 und 4 sowie 6 gezeigten Ausführungsformen bei der in Fig. 5 gezeigten Variante realisierbar sind. Gemäß Fig. 5 kann der Seitenstreifen 10 gegenüber der Höhenrichtung 14 geneigt sein.

Die Schnittansichten der Fig. 2 bis 6 liegen jeweils in einer Schnittebene 25, die in Fig. 1 angedeutet ist und die in Fig. 1 senkrecht auf der Zeichnungsebene und somit senkrecht auf der Plattenebene liegt. Die Schnittebene 25 ist demnach durch die Längsrichtung 7 und durch die Höhenrichtung 14 aufgespannt. In dieser Schnittebene 25 besitzt der Seitenstreifen 10 gegenüber der Höhenrichtung 14 gemäß Fig. 5 einen Neigungswinkel 26, der zweckmäßig in einem Bereich von 30° bis 60° liegt.

Der jeweilige Seitenstreifen 10, 11 besteht aus einem grundsätzlich luftdurchlässigen Werkstoff, z.B. ein Gewebe, ein Gewirk, ein Vlies oder ein Schaum, jeweils vorzugsweise aus Kunststoff, und besitzt eine ähnliche Elastizität und Flexibilität wie das Filtermaterial 3. Durch die Verklebung 18 erfolgt eine Versteifung des Seitenstreifens 10. Gleichzeitig wird der Seitenstreifen 10 durch die Verklebung 18 hinreichend dicht, so dass im Bereich des jeweiligen Seitenstreifens 10, 11 keine Leckage auftritt. Auch kann der Werkstoff des Seitenstreifens 10 komprimiert bzw. verdichtet sein, um seine Luftdurchlässigkeit zu reduzieren und seine Steifigkeit zu erhöhen.

Der Seitenstreifen 10 kann vorzugsweise aus demselben Werkstoff bestehen wie das Filtermaterial 3. Als Werkstoff für das Filtermaterial 3 bzw. für den jeweiligen Seitenstreifen 10, 11 kann beispielsweise ein Vlies, vorzugsweise ein Kunststoffvlies, zur Anwendung kommen. Dies ist für die Entsorgung des Filterelements 1 von besonderem Interesse, da aufgrund dieser Maßnahme beispielsweise keine Werkstofftrennung erforderlich ist.

Die in Fig. 6 gezeigte Ausführungsform entspricht grundsätzlich der in Fig. 3 gezeigten Ausführungsform, zeichnet sich jedoch durch die im Folgenden erläuterten zusätzlichen Maßnahmen aus. Bei der in Fig. 6 gezeigten Ausführungsform ist die letzte Falte 13 mit der vorletzten Falte 16 verklebt, so dass sich die Verklebung 18 auch zwischen der letzten Falte 13 und der zweitletzten Falte 16 befindet. Außerdem ist hier die zweitletzte Falte 16 mit der drittletzten Falte 17 verklebt, so dass auch zwischen der zweitletzten Falte 16 und der drittletzten Falte 17 eine solche Verklebung 18 vorhanden ist.

Abweichend zu Fig. 3 ist bei Fig. 6 ein durch den letzten Falz 20, die drittletzte Falte 17 und den Seitenstreifen 10 begrenzter Hohlraum nicht vom Klebstoff der Verklebung 18 ausgefüllt. Zweckmäßig wird der Klebstoff in diesem Fall in zwei separaten Streifen aufgebracht, nämlich einerseits in einem in Fig. 6 gezeigten oberen Bereich, in dem die letzte Falte 13 mit dem Seitenstreifen 10 verklebt ist, und in einem in Fig. 6 gezeigten unteren Bereich, in dem die drittletzte Falte 17 mit dem Seitenstreifen 10 verklebt ist. Hierdurch wird insgesamt weniger Klebstoff benötigt. Bei einer anderen Ausführungsform kann besagter Hohlraum wie in Fig. 3 auch mit Klebstoff ausgefüllt sein, so dass auch der letzte Falz 20 außen in die Verklebung 18 eingebunden ist.

Des Weiteren sind bei der in Fig. 6 gezeigten Ausführungsform die letzte Falte 13, die zweitletzte Falte 16 und die drittletzte Falte 17 im Vergleich zu Falten 27, die zum Längsende 9 benachbart sind, komprimiert. Die komprimierten Falten 13, 16, 17 sind hier zusätzlich noch miteinander verklebt. Die jeweilige Kompression ist hier so durchgeführt, dass eine Wandstärke 28 einer solchen komprimierten Falte 13, 16, 17 maximal halb so groß ist wie eine Wandstärke 29 einer solchen benachbarten, nicht komprimierten Falte 27.

Ferner ist bei der in Fig. 6 gezeigten Ausführungsform der drittletzte Falz 23 so gefalzt, dass er die letzte Falte 13, die zweitletzte Falte 16 und die drittletzte Falte 17 in der Längsrichtung 7 überbrückt, und zwar derart, dass eine viertletzte Falte 30 etwa parallel zum Seitenstreifen 10 verläuft und an der drittletzten Falte 17 flächig anliegt, vorzugsweise über die gesamte Höhe der drittletzten Falte 17.

Die vorstehend mit Bezug auf die in Fig. 6 gezeigte Ausführungsform erläuterten Merkmale, wie z.B. Verklebung und/oder Kompression der Falten, können auch bei den in den Fig. 2 bis 5 gezeigten Ausführungsformen vorgesehen werden, soweit dies bei diesen Ausführungsformen sinnvoll ist.

## Patentansprüche

1. Filterelement zum Filtern von Luft,
- mit einem plattenförmigen Filterkörper (2) aus einem gefalteten Filtermaterial (3), das eine Vielzahl von Falten (5) aufweist, die in einer Längsrichtung (7) des Filterkörpers (2) nebeneinander angeordnet sind,
- wobei je zwei benachbarte Falten (5) über einen gemeinsamen Falz (6) miteinander verbunden sind,
- wobei die Falze (6) parallel zu einer Querrichtung (8) des Filterkörpers (2) verlaufen,
- wobei der Filterkörper (2) zumindest an einem seiner Längsenden (9) einen Seitenstreifen (10) aufweist, der mit der an diesem Längsende (9) ausgebildeten letzten Falte (13) des Filtermaterials (3) verklebt ist,
- wobei die letzte Falte (13) in einer quer zur Längsrichtung (7) und quer zur Querrichtung (8) gemessenen Höhenrichtung (14) des Filterkörpers (2) kürzer ist als eine in der Höhenrichtung (14) gemessene Höhe (15) des Filterkörpers (2),
**dadurch gekennzeichnet,**
- **dass** der Seitenstreifen (10) am Längsende (9) mit der letzten Falte (13) und mit der zweitletzten Falte (16) und/oder mit der drittletzten Falte (17) verklebt ist.

2. Filterelement nach Anspruch 1,
**dadurch gekennzeichnet,**
**dass** der Seitenstreifen (10) in der Höhenrichtung (14) zwischen einer freien Endkante (19) der letzten Falte (13) und dem letzten Falz (20) mit der letzten Falte (13) und zwischen dem zweitletzten Falz (21) und dem drittletzten Falz (23) mit der zweitletzten Falte (16) und/oder mit der drittletzten Falte (17) verklebt ist.

3. Filterelement nach Anspruch 1 oder 2,
**dadurch gekennzeichnet,**
**dass** eine freie Endkante (19) der letzten Falte (13) in einem Bereich von 25% bis 75% oder in einem Bereich von 1/3 bis 2/3 oder bei etwa 50% der Höhe (15) des Filterkörpers (2) angeordnet ist.

4. Filterelement nach Anspruch 3,
**dadurch gekennzeichnet,**
- **dass** der Seitenstreifen (10) zwischen dem letzten Falz (20) und dem zweitletzten Falz (21) mit der letzten Falte (13) und der zweitletzten Falte (16) verklebt ist, und/oder
- **dass** der Seitenstreifen (10) zwischen dem letzten Falz (20) und der freien Endkante (19) mit der letzten Falte (13) und zwischen der freien Endkante (19) und dem zweitletzten Falz (21) mit der zweitletzten Falte (16) verklebt ist.

5. Filterelement nach Anspruch 1 oder 2,
**dadurch gekennzeichnet,**
**dass** auch die zweitletzte Falte (16) in der Höhenrichtung (14) kürzer ist als die Höhe (15) des Filterkörpers (2), so dass der letzte Falz (20) in der Höhenrichtung (14) zwischen dem zweitletzten Falz (21) und dem drittletzten Falz (23) angeordnet ist.

6. Filterelement nach Anspruch 5,
**dadurch gekennzeichnet,**
- **dass** der Seitenstreifen (10) zwischen einer freien Endkante (19) der letzten Falte (13) und dem drittletzten Falz (23) mit der letzten Falte (13) und der drittletzten Falte (17) verklebt ist, und/oder
- **dass** der Seitenstreifen (10) zwischen der freien Endkante (19) und dem letzten Falz (20) mit der letzten Falte (13) und zwischen dem letzten Falz (20) und dem drittletzten Falz (23) mit der drittletzten Falte (17) verklebt ist.

7. Filterelement nach einem der Ansprüche 5 und 6,
**dadurch gekennzeichnet,**
- **dass** die freie Endkante (19) in der Höhenrichtung (14) auf der Höhe des zweitletzten Falzes (21) angeordnet ist, und/oder
- **dass** der letzte Falz (20) in einem Bereich von 25% bis 75% oder in einem Bereich von 1/3 bis 2/3 oder bei etwa 50% der Höhe (15) des Filterkörpers (2) angeordnet ist.

8. Filterelement nach einem der Ansprüche 5 bis 7,
**dadurch gekennzeichnet,**
- **dass** die letzte Falte (13) in der Höhenrichtung (14) kürzer ist als die zweitletzte Falte (16), wobei der Seitenstreifen (10) zwischen dem zweitletzten Falz (21) und dem drittletzten Falz (23) mit der letzten Falte (13), mit der zweitletzten Falte (16) und mit der drittletzten Falte (17) verklebt ist, und/oder
- **dass** der Seitenstreifen (10) zwischen dem zweitletzten Falz (21) und der freien Endkante (19) mit der zweitletzten Falte (16), zwischen der freien Endkante (19) und dem letzten Falz (20) mit der letzten Falte (13) und zwischen dem letzten Falz (20) und dem drittletzten Falz (23) mit der drittletzten Falte (17) verklebt ist.

9. Filterelement nach Anspruch 8,
**dadurch gekennzeichnet,**
- **dass** die freie Endkante (19) in einem Bereich von 20% bis 40% oder bei etwa 1/3 der Höhe (15) des Filterkörpers (2) angeordnet ist, und
- **dass** der letzte Falz (20) in einem Bereich von 60% bis 80% oder bei etwa 2/3 der Höhe (15) des Filterkörpers (2) angeordnet ist.

10. Filterelement nach einem der Ansprüche 1 bis 9,
**dadurch gekennzeichnet,**
- **dass** der Seitenstreifen (10) gegenüber der Höhenrichtung (14) geneigt ist, oder
- **dass** der Seitenstreifen (10) in einer die Längsrichtung (7) und die Höhenrichtung (14) enthaltenden Ebene (25) gegenüber der Höhenrichtung (14) einen Neigungswinkel (26) aufweist, der in einem Bereich von 30° bis 60° oder bei etwa 45° liegt.

11. Filterelement nach einem der Ansprüche 1 bis 10,
**dadurch gekennzeichnet,**
**dass** der jeweilige Seitenstreifen (10, 11) aus einem luftdurchlässigen Werkstoff besteht.

12. Filterelement nach einem der Ansprüche 1 bis 11,
**dadurch gekennzeichnet,**
- **dass** die letzte Falte (13) mit der zweitletzten Falte (16) verklebt ist und daran anliegt, und/oder
- **dass** die zweitletzte Falte (16) mit der drittletzten Falte (17) verklebt ist und daran anliegt.

13. Filterelement nach einem der Ansprüche 1 bis 12,
**dadurch gekennzeichnet,**
- **dass** die letzte Falte (13) im Vergleich zu zum Längsende (9) benachbarten Falten (27) komprimiert ist, und/oder
- **dass** die zweitletzte Falte (16) im Vergleich zu zum Längsende (9) benachbarten Falten (27) komprimiert ist, und/oder
- **dass** die drittletzte Falte (17) im Vergleich zu zum Längsende (9) benachbarten Falten (27) komprimiert ist, und/oder
- **dass** die letzte Falte (13) und die zweitletzte Falte (16) im Vergleich zu zum Längsende (9) benachbarten Falten (27) komprimiert sind und miteinander verklebt sind, und/oder
- **dass** die zweitletzte Falte (16) und die drittletzte Falte (17) im Vergleich zu zum Längsende (9) benachbarten Falten (27) komprimiert sind und miteinander verklebt sind, und/oder
- **dass** die letzte Falte (13), die zweitletzte Falte (16) und die drittletzte Falte (17) im Vergleich zu zum Längsende (9) benachbarten Falten (27) komprimiert sind und miteinander verklebt sind.

14. Filterelement nach Anspruch 13,
**dadurch gekennzeichnet,**
**dass** eine Wandstärke (28) einer solchen komprimierten Falte (13, 16, 17) maximal 50% einer Wandstärke (29) einer solchen benachbarten Falte (27) beträgt.

15. Filterelement nach einem der Ansprüche 1 bis 14,
**dadurch gekennzeichnet,**
**dass** der drittletzte Falz (23) so gefalzt ist, dass er die letzte Falte (13), die zweitletzte Falte (16) und die drittletzte Falte (17) überbrückt, so dass eine viertletzte Falte (30) etwa parallel zum Seitenstreifen (10) verläuft.

## Claims

1. Filter element for filtering of air
- with a plate-shaped filter body (2) of a pleated filter material (3) having a plurality of pleats (5) arranged side-by-side in a longitudinal direction (7) of the filter body (2),
- whereby every two neighbouring pleats (5) are connected to one another by a common folded joint (6),
- whereby the folded joints (6) run parallel to a transverse direction (8) of the filter body (2),
- whereby the filter body (2) has, at at least one of its longitudinal ends (9), a side strip (10) that is adhered to the last pleat (13) of the filter material (3) formed at that longitudinal end (9),
- whereby the last pleat (13) is shorter, measured in a height direction (14) of the filter body (2) transverse to the longitudinal direction (7) and transverse to the transverse direction (8), than a height (15) of the filter body (2) measured in the height direction (14),
**characterized in that**
- the side strip (10) at the longitudinal end (9) is adhered to the last pleat (13) and to the second-last pleat (16) and/or to the third-last pleat (17).

2. Filter element according to claim 1,
**characterized in that**
the side strip (10) is adhered, in the height direction (14) between a free end edge (19) of the last pleat (13) and the last folded joint (20), to the last pleat (13) and, between the second-last folded joint (21) and the third-last folded joint (23), to the second-last pleat (16) and/or to the third-last pleat (17).

3. Filter element according to claim 1 or 2,
**characterized in that**
a free end edge (19) of the last pleat (13) is arranged in a region from 25% to 75% or in a region from 1/3 to 2/3 or at about 50% of the height (15) of the filter body (2).

4. Filter element according to claim 3,
**characterized in that**
- the side strip (10) is adhered to the last pleat (13) and the second-last pleat (16) between the last folded joint (20) and the second-last folded joint (21) and/or
- the side strip (10) is adhered to the last pleat (13) between the last folded joint (20) and the free end edge (19), and to the second-last pleat (16) between the free end edge (19) and the second-last folded joint (21).

5. Filter element according to claim 1 or 2,
**characterized in that**
the second-last pleat (16) is also shorter in the height direction (14) than the height (15) of the filter body (2), so that the last folded joint (20) is arranged between the secondlast folded joint (21) and the third-last folded joint (23) in the height direction (14).

6. Filter element according to claim 5,
**characterized in that**
- the side strip (10) is adhered to the last pleat (13) and the third-last pleat (17) between a free end edge (19) of the last pleat (13) and the third-last folded joint (23), and/or
- the side strip (10) is adhered to the last pleat (13) between the free end edge (19) and the last folded joint (20), and to the third-last pleat (17) between the last folded joint (20) and the third-last folded joint (23).

7. Filter element according to one of the claims 5 and 6,
**characterized in that**
- the free end edge (19) is arranged at the height of the second-last folded joint (21) in the height direction (14), and/or
- the last folded joint (20) is arranged in a region from 25% to 75% or in a region from 1/3 to 2/3 or at about 50% of the height (15) of the filter body (2).

8. Filter element according to one of the claims 5 to 7
**characterized in that**
- the last pleat (13) is shorter in the height direction (14) than the second-last pleat (16), whereby the side strip (10) is adhered to the last pleat (13), to the second-last pleat (16) and to the third-last pleat (17) between the second-last folded joint (21) and the third-last folded joint (23), and/or
- the side strip (10) is adhered to the second-last pleat (16) between the second-last folded joint (21) and the free end edge (19), to the last pleat (13) between the free end edge (19) and the last folded joint (20), and to the third-last pleat (17) between the last folded joint (20) and the third-last folded joint (23).

9. Filter element according to claim 8,
**characterized in that**
- the free end edge (19) is arranged in a region from 20% to 40% or at about 1/3 of the height (15) of the filter body (2), and
- the last folded joint (20) is arranged in a region from 60% to 80% or at about 2/3 of the height (15) of the filter body (2).

10. Filter element according to one of the claims 1 to 9,
**characterized in that**
- the side strip (10) is inclined relative to the height direction (14),
or
- the side strip (10) has, in a plane (25) containing the longitudinal direction (7) and the height direction (14), an angle of inclination (26) relative to the height direction (14) that lies in a range from 30° to 60° or at about 45°.

11. Filter element according to one of the claims 1 to 10,
**characterized in that**
the respective side strip (10, 11) consists of an air-permeable material.

12. Filter element according to one of the claims 1 to 11,
**characterized in that**
- the last pleat (13) is adhered to, and lies on, the second-last pleat (16), and/or
- the second-last pleat (16) is adhered to, and lies on, the third-last pleat (17).

13. Filter element according to one of the claims 1 to 12,
**characterized in that**
- the last pleat (13) is compressed in comparison with pleats (27) neighbouring the longitudinal end (9), and/or
- the second-last pleat (16) is compressed in comparison with pleats (27) neighbouring the longitudinal end (9), and/or
- the third-last pleat (17) is compressed in comparison with pleats (27) neighbouring the longitudinal end (9), and/or
- the last pleat (13) and the second-last pleat (16) are adhered to one another and compressed in comparison with pleats (27) neighbouring the longitudinal end (9), and/or
- the second-last pleat (16) and the third-last pleat (17) are adhered to one another and compressed in comparison with pleats (27) neighbouring the longitudinal end (9), and/or
- the last pleat (13), the second-last pleat (16) and the third-last pleat (17) are adhered to one another and compressed in comparison with pleats (27) neighbouring the longitudinal end (9).

14. Filter element according to claim 13,
**characterized in that**
a wall thickness (28) of such a compressed pleat (13, 16, 17) is maximally 50% of a wall thickness (29) of such a neighbouring pleat (27).

15. Filter element according to one of the claims 1 to 14,
**characterized in that**
the third-last folded joint (23) is folded such that it bridges the last pleat (13), the second-last pleat (16) and the third-last pleat (17), so that a fourth-last pleat (30) runs about parallel to the side strip (10).

## Revendications

1. Élément de filtre pour filtrer l'air,
- avec un corps de filtre en forme de plaque (2) en un matériau de filtre plié (3), qui présente une pluralité de plis (5), qui sont agencés l'un à côté de l'autre dans un sens longitudinal (7) du corps de filtre (2),
- où respectivement deux plis adjacents (5) sont reliés l'un à l'autre par le biais d'une pliure commune (6),
- où les pliures (6) s'étendent parallèlement à un sens transversal (8) du corps de filtre (2),
- où le corps de filtre (2) présente au moins à une de ses extrémités longitudinales (9) une bande latérale (10), qui est collée avec le dernier pli (13) du matériau de filtre (3) formé au niveau de cette extrémité longitudinale (9),
- où le dernier pli (13) dans un sens de la hauteur (14) du corps de filtre (2) mesuré transversalement au sens longitudinal (7) et transversalement au sens transversal (8) est plus court qu'une hauteur (15) du corps de filtre (2) mesurée dans le sens de la hauteur (14),
**caractérisé en ce**
- **que** la bande latérale (10) est collée au niveau de l'extrémité longitudinale (9) avec le dernier pli (13) et avec l'avant-dernier pli (16) et/ou avec l'antépénultième pli (17).

2. Élément de filtre selon la revendication 1,
**caractérisé en ce**
**que** la bande latérale (10) est collée dans le sens de la hauteur (14) entre une arête d'extrémité libre (19) du dernier pli (13) et la dernière pliure (20) avec le dernier pli (13) et entre l'avant-dernière pliure (21) et l'antépénultième pliure (23) avec l'avant-dernier pli (16) et/ou l'antépénultième pli (17).

3. Élément de filtre selon la revendication 1 ou 2,
**caractérisé en ce**
**qu'**une arête d'extrémité libre (19) du dernier pli (13) est agencée dans une plage de 25 % à 75 % ou dans une plage de 1/3 à 2/3 ou à environ 50 % de la hauteur (15) du corps de filtre (2).

4. Élément de filtre selon la revendication 3,
**caractérisé en ce**
- **que** la bande latérale (10) est collée entre la dernière pliure (20) et l'avant-dernière pliure (21) avec le dernier pli (13) et l'avant-dernier pli (16), et/ou
- **que** la bande latérale (10) est collée entre la dernière pliure (20) et l'arête d'extrémité libre (19) avec le dernier pli (13) et entre l'arête d'extrémité libre (19) et l'avant-dernière pliure (21) avec l'avant-dernier pli (16).

5. Élément de filtre selon la revendication 1 ou 2,
**caractérisé en ce**
**que** l'avant-dernier pli (16) dans le sens de la hauteur (14) est aussi plus court que la hauteur (15) du corps de filtre (2), si bien que la dernière pliure (20) est agencée dans le sens de la hauteur (14) entre l'avant-dernière pliure (21) et l'antépénultième pliure (23).

6. Élément de filtre selon la revendication 5,
**caractérisé en ce**
- **que** la bande latérale (10) est collée entre une arête d'extrémité libre (19) du dernier pli (13) et l'antépénultième pliure (23) avec le dernier pli (13) et l'antépénultième pli (17), et/ou
- **que** la bande latérale (10) est collée entre l'arête d'extrémité libre (19) et la dernière pliure (20) avec le dernier pli (13) et entre la dernière pliure (20) et l'antépénultième pliure (23) avec l'antépénultième pli (17).

7. Élément de filtre selon l'une quelconque des revendications 5 et 6, **caractérisé en ce**
- **que** l'arête d'extrémité libre (19) est réalisée dans le sens de la hauteur (14) à la hauteur de l'avant-dernière pliure (21), et/ou
- **que** la dernière pliure (20) est agencée dans une plage de 25 % à 75 % ou dans une plage de 1/3 à 2/3 ou à environ 50 % de la hauteur (15) du corps de filtre (2).

8. Élément de filtre selon l'une quelconque des revendications 5 à 7,
**caractérisé en ce**
- **que** le dernier pli (13) dans le sens de la hauteur (14) est plus court que l'avant-dernier pli (16), où la bande latérale (10) est collée entre l'avant-dernière pliure (21) et l'antépénultième pliure (23) avec le dernier pli (13), avec l'avant-dernier pli (16) et avec l'antépénultième pli (17), et/ou
- **que** la bande latérale (10) est collée entre l'avant-dernière pliure (21) et l'arête d'extrémité libre (19) avec l'avant-dernier pli (16), entre l'arête d'extrémité libre (19) et la dernière pliure (20) avec le dernier pli (13) et entre la dernière pliure (20) l'antépénultième pliure (23) avec l'antépénultième pli (17).

9. Élément de filtre selon la revendication 8,
**caractérisé en ce**
- **que** l'arête d'extrémité libre (19) est agencée dans une plage de 20 % à 40 % ou à environ 1/3 de la hauteur (15) du corps de filtre (2), et
- **que** la dernière pliure (20) est agencée dans une plage de 60 % à 80 % ou à environ 2/3 de la hauteur (15) du corps de filtre (2).

10. Élément de filtre selon l'une quelconque des revendications 1 à 9,
**caractérisé en ce**
- **que** la bande latérale (10) est inclinée par rapport au sens de la hauteur (14), ou
- **que** la bande latérale (10) présente dans un plan (25) contenant le sens longitudinal (7) et le sens de la hauteur (14) un angle d'inclinaison (26) par rapport au sens de la hauteur (14), qui est dans une plage de 30° à 60° ou d'environ 45°.

11. Élément de filtre selon l'une quelconque des revendications 1 à 10,
**caractérisé en ce**
**que** la bande latérale (10, 11) respective consiste en un matériau perméable à l'air.

12. Élément de filtre selon l'une quelconque des revendications 1 à 11,
**caractérisé en ce**
- **que** le dernier pli (13) est collé avec l'avant-dernier pli (16) et s'appuie contre celui-ci, et/ou
- **que** l'avant-dernier pli (16) est collé avec l'antépénultième pli (17) et s'appuie contre celui-ci.

13. Élément de filtre selon l'une quelconque des revendications 1 à 12,
**caractérisé en ce**
- **que** le dernier pli (13) est comprimé par rapport à des plis (27) adjacents à l'extrémité longitudinale (9), et/ou
- **que** l'avant-dernier pli (16) est comprimé par rapport à des plis (27) adjacents à l'extrémité longitudinale (9), et/ou
- **que** l'antépénultième pli (17) est comprimé par rapport à des plis (27) adjacents à l'extrémité longitudinale (9), et/ou
- **que** le dernier pli (13) et l'avant-dernier pli (16) sont comprimés par rapport à des plis (27) adjacents à l'extrémité longitudinale (9) et collés l'un à l'autre, et/ou
- **que** l'avant-dernier pli (16) et l'antépénultième pli (17) sont comprimés par rapport à des plis (27) adjacents à l'extrémité longitudinale (9) et collés l'un à l'autre, et/ou
- **que** le dernier pli (13), l'avant-dernier pli (16) et l'antépénultième pli (17) sont comprimés par rapport à des plis (27) adjacents à l'extrémité longitudinale (9) et collés l'un à l'autre.

14. Élément de filtre selon la revendication 13,
**caractérisé en ce**
**qu'**une épaisseur de paroi (28) d'un tel pli comprimé (13, 16, 17) est au maximum 50 % d'une épaisseur de paroi (29) d'un tel pli adjacent (27).

15. Élément de filtre selon l'une quelconque des revendications 1 à 14,
**caractérisé en ce**
**que** l'antépénultième pliure (23) est pliée de façon à ce que le dernier pli (13), l'avant-dernier pli (16) et l'antépénultième pli (17) sont pontés, si bien qu'un antéantépénultième pli (30) s'étend à peu près parallèlement à la bande latérale (10).
